(19) Europäisches Patentamt

European Patent Office

Office européen des brevets

(11) **EP 1 032 150 A2**

(12) **EUROPEAN PATENT APPLICATION**

(43) Date of publication:
**30.08.2000 Bulletin 2000/35**

(51) Int. Cl.⁷: **H04L 1/00**

(21) Application number: **00103390.1**

(22) Date of filing: **24.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.02.1999 US 258494**

(71) Applicant: **TRW Inc.**
**Redondo Beach, California 90278 (US)**

(72) Inventors:
• **Wilcoxson, Donald C.**
**Ft. Wayne, Indiana 46845 (US)**

• **Yamada, Akemichi**
**Rancho Palos Verdes, California 90275 (US)**
• **Reid, Ryan C.**
**Redondo Beach, California 90277 (US)**

(74) Representative:
**Schmidt, Steffen J., Dipl.-Ing.**
**Wuesthoff & Wuesthoff,**
**Patent- und Rechtsanwälte,**
**Schweigerstrasse 2**
**81541 München (DE)**

(54) **A method for high speed modulation and error control coding**

(57) A digital data communication system is provided for transmitting a high speed differentially encoded data signal between a transmitter and a receiver. On the transmitter side (44), a high speed input data stream (42) is separated into a plurality of lower rate data streams by a demultiplexer (46). Prior to being multiplexed together to form a single high speed data stream, each of the lower rate data streams are individually block encoded by a group of Reed-Solomon block encoders (48) and then differentially encoded by a group of differential encoders (50). Alternatively, the plurality of low rate data streams are block encoded and then multiplexed together prior to being differentially encoded, so long as the multiplexing is performed on a code symbol-by-code symbol basis. Since the performance of a non-binary-based block code is based on an input code symbol error rate (as opposed to an input bit error rate), performance loss associated with either of the differential encoding schemes of the present invention are comparable to a non-differential encoding scheme.

FIGURE 7

**Description**

BACKGROUND OF THE INVENTION

1. Field of the Invention

This invention relates generally to a digital data communication system and, more particularly, to a differential encoding and error control coding scheme for high speed modulation in a digital data communication system.

2. Discussion of the Related Art

Modern data communication systems generally require low bit error probabilities. In a moderate-rate communication application (e.g., on the order of 100 Mb/s or less), a forward error correction scheme, such as convolutional encoding or block encoding, can be used to achieve low bit error rates (e.g., on the order of $10^{-5}$) at low signal-to-noise ratios. However, a large number of mathematical operations per decoded bit are generally required for complex convolutional codes (i.e., having high constraint length) or high overhead block codes (i.e., having a low ratio of information bits to parity-check bits). As a result, the implementation of even moderate-rate decoding algorithms can be difficult in commercially viable hardware (e.g., CMOS).

In order to accommodate higher data rates (e.g., several hundred Mb/s or more) while maintaining reasonable hardware complexity, multi-hop communication systems (where data is demodulated and remodulated at intermediate locations prior to the final destination), generally go without coding and have reasonably simple modulation schemes. In some instances, very light convolutional coding can be employed along with a greater transmit power and/or a larger antenna to overcome the degradations incurred when implementing a high speed demodulate-remodulate system. To achieve very low bit error probabilities (e.g., on the order of $10^{-10}$) at these higher data rates, it turns out that Reed-Solomon block codes are generally preferable to convolutional codes (of the same coding rate) because they provide better performance at the same signal-to-noise ratio. Unfortunately, high rate (speed) decoding of a relatively modest complexity Reed-Solomon block code is difficult (if not impossible) to implement in commercially available hardware.

Therefore, it is desirable to provide a digital data communication system for transmitting high speed data signals having very low bit error probabilities. By combining differential encoding with Reed-Solomon block encoding and multiplexing techniques, degradations normally associated with differentially encoding are dramatically reduced. As a result, near-coherent performance can be achieved. Moreover, very low error probabilities can be obtained using low-complexity hardware, without the need to significantly alter other system performance parameters, such as power consumption, size, and weight. The differential encoding scheme of the present invention also provides additional benefits to a coherently-detected high-rate system, such as resolving phase ambiguity and eliminating cycle-slippage problems.

SUMMARY OF THE INVENTION

In accordance with the present invention, a digital data communication system is provided for transmitting a high speed differentially encoded data signal between a transmitter and a receiver. On the transmitter side, a high speed input data stream is separated into a plurality of lower rate data streams by a demultiplexer. Prior to being multiplexed back together to form a single high speed data stream, each of the lower rate data streams are individually block encoded by a group of Reed-Solomon (RS) block encoders and differentially encoded by a group of differential encoders. Alternatively, the plurality of low rate data streams are block encoded and then multiplexed together prior to being differential encoded, so long as the multiplexing is performed on a code symbol-by-code symbol basis. Since the performance of a non-binary-based block encoder (such as an RS encoder) is based on an input code symbol error rate (as opposed to an input bit error rate), performance loss associated with the differential encoding schemes of the present invention are comparable to a non-differentially encoded-coherent detection scheme.

BRIEF DESCRIPTION OF THE DRAWINGS

Other objects and advantages of the present invention will be apparent to those skilled in the art upon reading the following detailed description and upon reference to the drawings in which:

Figure 1 is a diagram illustrating a typical satellite data communication system in accordance with the present invention;
Figure 2 is a chart illustrating how differential decoding typically causes two errors for each single error in the transmitted bit stream;

Figure 3 is a block diagram showing a demultiplexer operating on a bit-by-bit basis;

Figure 4 is a block diagram showing a demultiplexer operating on a code symbol-by-code symbol basis in accordance with a differential encoding scheme of the present invention;

Figure 5 illustrates the error pairs that can occur in an eight (8) bit block code symbol;

Figure 6 is a block diagram showing the demultiplexing operation being performed before the differential and block decoding operations in accordance with the present invention;

Figure 7 is a block diagram depicting a transmitter implementing a differential encoding scheme of the present invention;

Figure 8 is a block diagram depicting a receiver implementing the differential encoding scheme of the present invention; and

Figure 9 is a block diagram depicting a transmitter implementing an alternative differential encoding scheme of the present invention.

## DETAILED DESCRIPTION OF THE PREFERRED EMBODIMENTS

While the present invention is described herein with reference to illustrative embodiments for particular applications (e.g., inter-satellite links), it should be understood that the invention is not limited thereto. Any data communication system requiring very low bit error probabilities and high data rates without extreme bandwidth expansion could benefit from the present invention. Those having ordinary skill in the art and access to the teachings provided herein will recognize additional modifications, applications and embodiments within the scope thereof and additional fields in which the present invention would be of significant utility.

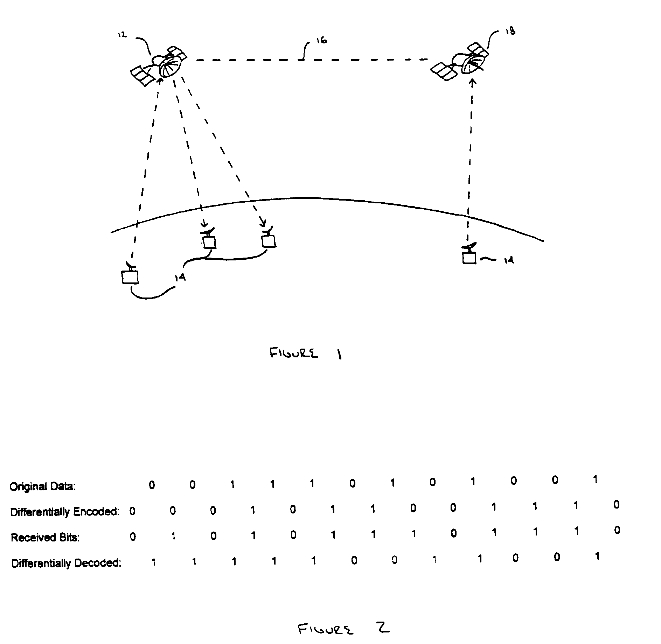

A typical satellite communication system 10 is depicted in Figure 1. The satellite communication system 10 includes at least one orbiting satellite 12 which may complete a virtual circuit connection between two of a plurality of ground stations 14. Generally, information is uplinked from a transmitting ground station to the satellite which in turn downlinks the information to a receiving ground station. However, in order to extend communication coverage of the satellite communication system 10, a satellite 12 may also communicate via an inter-satellite link 16 directly with a second satellite 18 which may then communicate with other ground stations 14.

For a typical high speed inter-satellite link, the information rate is at least 500 Mb/s with a bit error rate requirement on the order of $10^{-9}$ or $10^{-10}$. As will be more fully explained, a differential encoding scheme in accordance with the present invention is properly suited to handle the high speed nature of an inter-satellite link requiring very low bit error probability. In the context of a satellite communication system 10, the differential encoding scheme of the present invention is not exclusive to an inter-satellite link, it is envisioned that it may also be applicable to a high speed communication link between a single ground station and a satellite, or between two terrestrial ground stations.

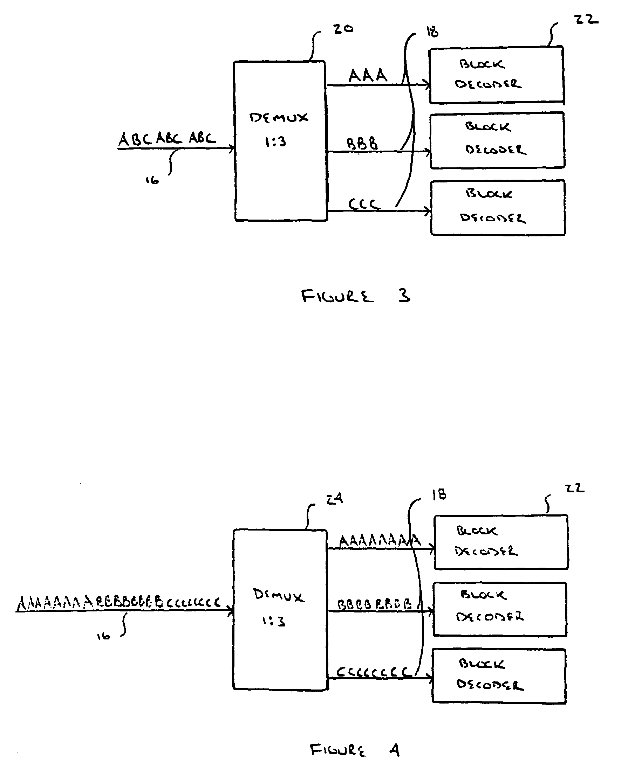

With regards to bit error rate performance, differential encoding combined with coherent demodulation (or detection) generally yields approximately twice as many errors as coherent detection alone. When used to make a differential decision, a single error in a transmitted bit stream causes two errors in the differentially decoded bit stream (the bits in gray denote errors) as shown in Figure 2. More specifically, the bit error probability of a non-differentially encoded-coherently detected binary phase-shift keying (BPSK) data signal is given by:

$$P_b(E) = Q\left(\sqrt{\frac{2E_b}{N_o}}\right)$$

whereas, the bit error probability of a differentially encoded-coherently detected BPSK signal is given by:

$$P_b(E) = 2Q\left(\sqrt{\frac{2E_b}{N_o}}\right)\left[1 - Q\left(\sqrt{\frac{2E_b}{N_o}}\right)\right]$$

Thus, the error probability for differential encoding-coherent detection is approximately twice the error probability for non-differentially coded-coherent detection. However, some of the performance loss can be regained depending on how and where the differential encoding is performed in relation to the other signal processing techniques (e.g., block encoding and multiplexing) employed in the satellite link. Accordingly, the differential encoding scheme of the present invention achieves bit error rates comparable to those associated with non-differential encoding-coherently detected schemes.

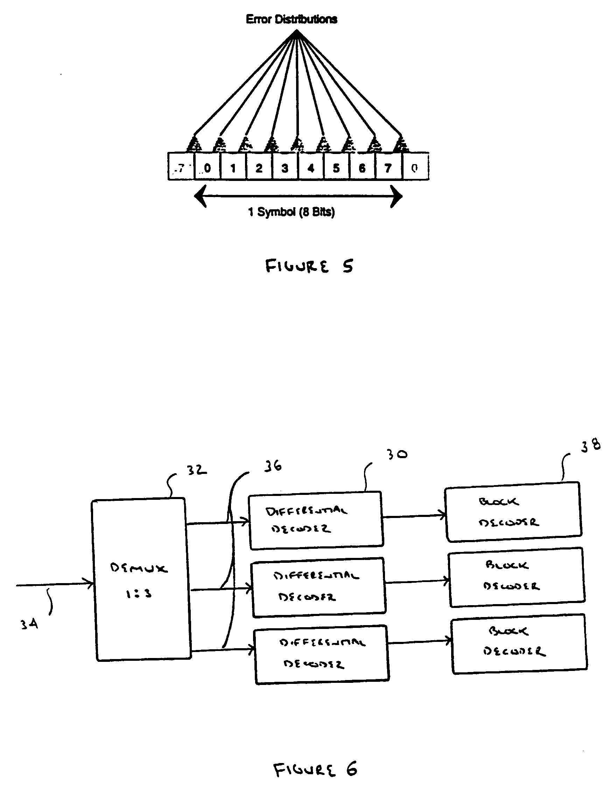

In Figure 3, a demultiplexer (1:3) 20 receives an input data signal 16 and seperates it into three output signals 18. When the demultiplexer 20 operates on a bit-by-bit basis, each bit going into the demultiplexer 20 is placed on the next subsequent output line. For a non-diffferentially encoded data stream, the bit error rate and code symbol error rate going into the demultiplexer 20 will be identical to the bit and code symbol error rates going into each of a series of three block decoders 22. In the case of an input data signal containing fifteen (15) errors for every 3000 bits of data, each output line exhibits a bit error rate of $5 \times 10^{-3}$.

In contrast, if the input signal 16 going into the demultiplexer 20 is a differentially encoded data signal, then it will contain approximately 30 errors for every 3000 bits of data. Although these 30 errors generally occur in pairs, the pairs are randomly distributed over AB, AC, or BC bit combinations, such that the net effect is to double the amount of errors going into each of the block decoders 22. Assuming that the error pairs are generally spaced more than 8 bits apart (for a block code based on 8 bit symbols), the code symbol error rate going into each of the block decoders 22 is also doubled.

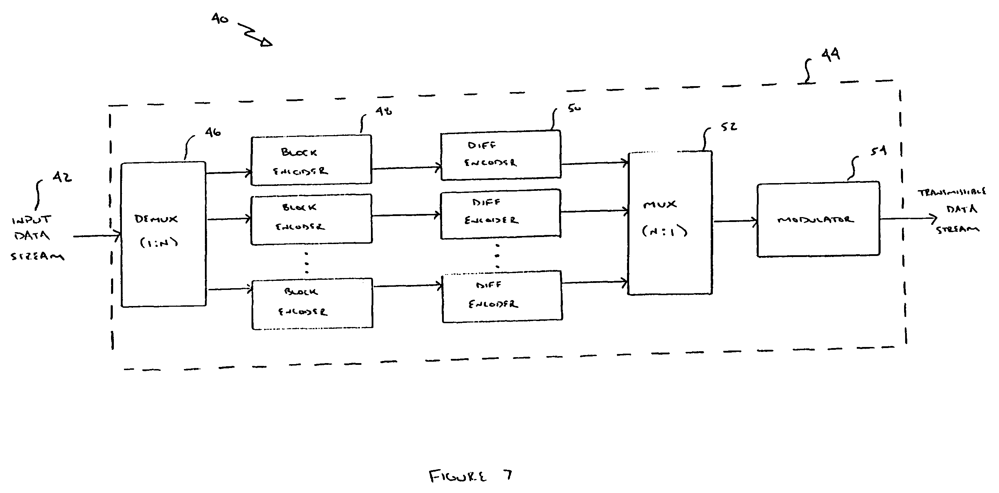

Next, consider the case where a demultiplexer 24 operates on a code symbol-by-code symbol basis. In Figure 4, the demultiplexer (1:3) 24 receives a differentially decoded input data signal 16 and seperates it into three output signals 18. For illustration purposes, the code symbol is based on an 8 bit or byte symbol (also referred to herein as a byte-by-byte basis). Thus, each sequence of 8 bits (i.e., a code symbol) going into the demultiplexer 24 is placed onto the next subsequent output line. Because the demultiplexer 24 operates on code symbol basis, it is likely that each of the error pairs will be grouped within a block code symbol.

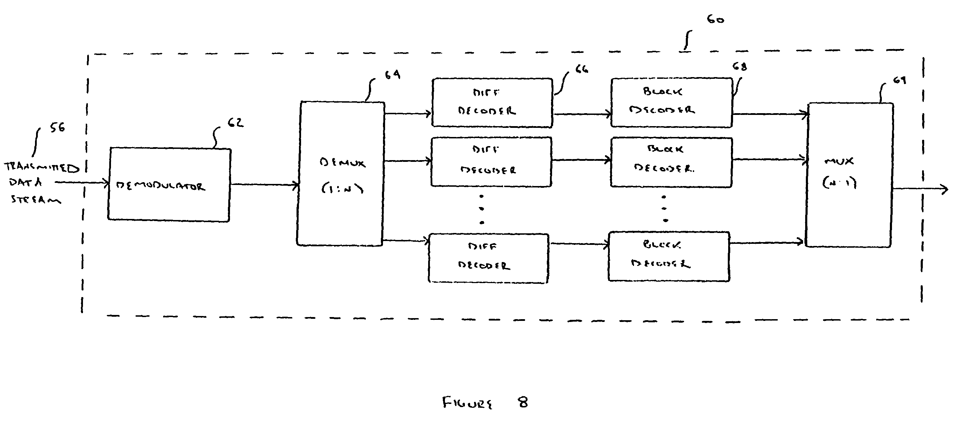

Figure 5 illustrates how there is a 7 in 9 chance that an error pair will end up in the same block symbol. In the event that the error pair falls within the same symbol, the symbol error rate of the data going into each of the block decoders 22 does not increase. On the other hand, 2 out of 9 times the error pair falls on a symbol boundary, thereby increasing the symbol error rate going into each of the block decoders 22. One skilled in the art will readily recognize from such discussions, that this differential encoding scheme is applicable to any block code having at least 2 bits per code symbol.

Since the performance of a block code is based on its input code symbol error rate and not its input bit error rate (although the two are related, it is not one-to-one and unique), the performance loss associated with demultiplexing a differentially decoded data signal on a symbol-by-symbol basis (i.e., block code symbol), is minimal when compared to a non-differentially encoded data signal. The following table summarizes the performance loss values:

|  | Encoding Method | Demux Method | Req'd $E_b/N_o$(dB) | Loss (dB) |
|---|---|---|---|---|
| **Bits** | Non-differential (coherent) | bit-by-bit | 6.692 | 0 (reference) |
|  | Non-differential (coherent) | byte-by-byte | 6.692 | 0 |
|  | Differential | bit-by-bit | 7.324 | 0.632 |
|  | Differential | byte-by-byte | 6.867 | 0.175 |

Overall, this type of differential encoding scheme exhibits some degradation (0.175 dB) in relation to strictly non-differential encoding (0 dB), and considerably less degradation than demultiplexing a differentially encoded data signal (0.632 dB) on a bit-by-bit basis.

It should also be noted that bit error rate performance is slightly different when the above-described differential encoding scheme is applied to quadrature phase-shift keying (QPSK) modulated signals. As will be apparent to one skilled in the art, the multiplexer operates on a QPSK symbol-by-QPSK symbol basis, but otherwise the error probability for QPSK symbol-by-QPSK symbol demultiplexing is analogous to the above-described case of bit-by-bit demultiplexing. However, when four QPSK symbols are demultiplexed together (analogous to byte-by-byte demultiplexing), there is a 3 in 5 chance that two adjacent QPSK symbols in error will lie within the same block symbol, and therefore not increase the error probability of the data going into the block decoders. Accordingly, 2 out of 5 times the errors will lie on the block symbol boundary, and thus increase the error probability of the data going into the block decoders. For QPSK modulated signals, the following table summarizes the performance loss values:

|  | Encoding Method | Demux Method | Req'd $E_b/N_o$ (dB) | Loss (dB) |
|---|---|---|---|---|
| **QPSK Symbols** | Non-differential (coherent) | $sym_{QPSK}$-by-$sym_{QPSK}$ | 6.692 | 0 (reference) |

(continued)

|  | Encoding Method | Demux Method | Req'd $E_b/N_o$ (dB) | Loss (dB) |
|---|---|---|---|---|
|  | Non-differential (coherent) | $sm_{RS}$-by-sym$_{RS}$ | 6.692 | 0 |
|  | Differential | $sym_{QPSK}$-by-sym$_{QPSK}$ | 7.324 | 0.632 |
|  | Differential | $sym_{RS}$-by-sym$_{RS}$ | 6.987 | 0.295 |

Again, there is considerably less degradation associated with demultiplexing a differentially decoded data signal on a code symbol-by-code symbol basis (0.295 dB) as compared to demultiplexing on a QPSK symbol-by-QPSK symbol basis (0.632 dB).

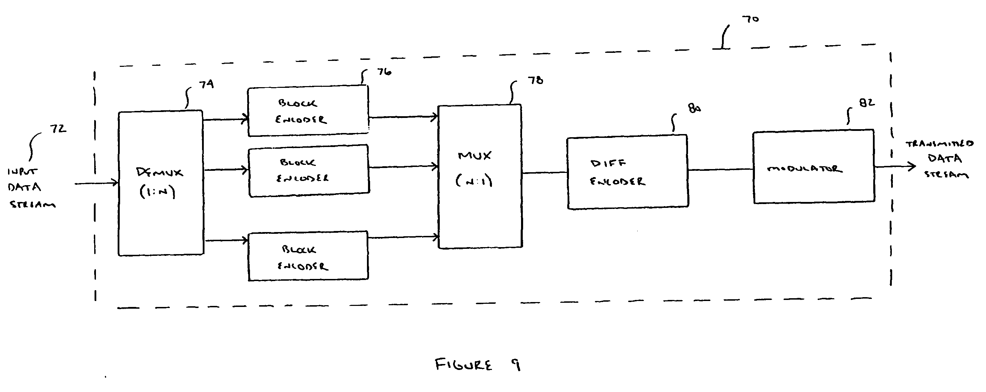

In each of the above cases, differential encoding is performed after multiplexing on the transmitter side. However, similar performance loss can be achieved by moving a series of differential encoders in front of the multiplexer. Accordingly, a series of differential decoders 30 is moved after a demultiplexer 32 on the receiver side as shown in Figure 6. First, the demultiplexer (1:3) 32 receives an input data signal 34 from the transmitter and seperates it into three output signals 36. Next, each of the output signals are differentially decoded by the series of three differential decoders 30 and then block decoded by a series of three block decoders 38.

In this alternative differential encoding scheme, the error pairs that arise from differential decoding will always behave in the same manner as the previously described byte-by-byte case. That is, there will be a 7 in 9 chance that the error pair will fall within the same block symbol, and only 2 out of 9 times will the error pair fall on a symbol boundary. As a result, multiplexing on a bit-by-bit or a symbol-by-symbol basis has no effect on performance loss so long as differential encoding is performed before multiplexing on the transmitter side. The performance loss for this alternative differential encoding scheme is on the order of 0.175 dB. Moving the differential encoders in front of the multiplexer also provides similar results for QPSK modulated signals. In this case, the performance loss is on the order of 0.295 dB. Although each of the above-described differential encoding schemes have been presented in the context of a differential-encoded, coherently-detected system, it is also envisioned that similar improvements in performance loss can be achieved in differentially-encoded, differentially detected systems.

A first preferred embodiment of a differential encoding scheme 40 for use on the transmitter side of a high speed satellite link is shown in Figure 7. Due to the complexity of implementing a single 500 Mb/s block decoder, an input data stream 42 into a transmitter 44 is split up into N lower rate data streams by a (1:N) demultiplexer 46. Splitting up the encoding and decoding process into several parallel data streams reduces the hardware complexity of the decoders which can in turn operate at a lower rate without any loss in performance over a single, high speed decoder. As will be apparent to one skilled in the art, the implementation of the demultiplexer may vary in accordance with the present invention.

Next, each of the lower rate data streams undergoes block encoding by a set of block encoders 48, such that each of the block encoders 48 operates at 1/N times the speed of the overall data rate of the satellite link. As previously discussed, the use of convolutional codes is precluded by the complexity of high speed decoders as well as by the bandwidth expansion necessary to achieve very low bit error rates. As a result, a block code was chosen for encoding each of the lower rate data streams. More specifically, the byte organized ATM cell structure associated with a satellite link lends itself to a (255,239) Reed-Solomon code having 8-bit (i.e., byte size) symbols. Although a Reed-Solomon block code is preferable, it is envisioned that other types of block codes (based on symbols having at least 2 bits per symbol) may also be implemented in accordance with the present invention.

Each of the separately block encoded data streams are then differentially encoded by a set of differential encoders 50, and then multiplexed together by a (N:1) multiplexer 52 to form a single high rate transmissible data stream 56. As will be apparent to one skilled in the art, this data stream is preferably QPSK modulated by a modulator 54 before being transmitted by the transmitter. It is also envisioned that other modulation techniques may be applied to the data stream prior to its transmission by the transmitter.

On the receiver side 60, the transmitted data stream 56 is likewise demultiplexed, differentially decoded and then block decoded as shown in Figure 8. First, the transmitted data stream 56 is demodulated by a demodulator 62. Next, the demodulated data stream from the demodulator 62 is seperated into a plurality of demodulated data streams by a demultiplexer (1:N) 64. Each of the demodulated data streams are then differentially decoded by a series of differential decoders 66 and block decoded by a series of block decoders 68. Lastly, a multiplexer 69 is used to combine the plurality of data signals into a single high rate data stream.

In an alternative embodiment, each of the block encoded data streams are multiplexed together and then differentially encoded as shown in Figure 9. More specifically, on the transmitter side 70, an input data stream 72 is seperated in a plurality of data streams by a demultiplexer 74. Each of the data streams are then block encoded by a series of block encoders 76 prior to being combined into a single data stream by a multiplexer 78. Next, a differential encoder 80 differentially encodes the data stream. Lastly, the data stream is modulated by a modulator 82. Since optical modulators naturally encode data in a differential manner, this embodiment is typically preferred in a optical-based (rather than RF) link. On the receiver side (not shown), demultiplexing is performed on a code symbol-by-code symbol basis after differential decoding. Otherwise, this alternative embodiment of the differential encoding scheme of the present invention is similar to the first preferred embodiment.

It should be appreciated that the differential encoding scheme of the present invention is properly suited to handle the high speed nature of an inter-satellite link requiring very low bit error probability. Very low bit error probabilities can be obtained using low-complexity, commercially available hardware without the need to significantly alter other performance parameters, such as power consumption, size, and weight. Furthermore, the differential encoding scheme of the present invention offers several additional benefits, such as removing the phase ambiguity that arises from phase-shift-keyed signaling (e.g., a phase ambiguity of pi/2 for QPSK) and alleviating cycle-slipping that could otherwise degrade the performance of a non-differentially encoded system.

The foregoing discloses and describes merely exemplary embodiments of the present invention. One skilled in the art will readily recognize from such discussion, and from the accompanying drawings and claims, that various changes, modifications and variations can be made therein without departing from the spirit and scope of the present invention.

**Claims**

1. A digital data communication system for transmitting a high speed differentially encoded data signal between a transmitter and a receiver, the transmitter comprising:

   a plurality of block encoders each receiving one of a plurality of data signals and applying a block code to form one of a plurality of block coded data signals;
   a plurality of differential encoders each receiving one of said plurality of block coded data signals and applying a differential code to form one of a plurality of differentially coded data signals; and
   a multiplexer receiving said plurality of differentially coded data signals and combining said plurality of differentially coded data signals to form a differentially coded transmissible data signal.

2. The digital data communication system of Claim 1 wherein said plurality of block encoders applies a block code based on symbols having at least two bits.

3. The digital data communication system of Claim 1 wherein said plurality of block encoders applies a Reed-Solomon block code.

4. The digital data communication system of Claim 1 further comprising a demultiplexer receiving an input data signal and separating said input data signal into said plurality of data signals.

5. The digital data communication system of Claim 1 further comprising a modulator receiving said differentially coded transmissible data signal and modulating said differentially coded transmissible data signal prior to transmission by the transmitter.

6. The digital data communication system of Claim 1 wherein the receiver of said differentially coded transmissible data signal includes:

   a demodulator receiving said differentially coded transmissible data signal for demodulating said differentially coded transmissible data signal into a demodulated data signal;
   a demultiplexer receiving said demodulated data signal for separating said demodulated data signal into a plurality of demodulated data signals;
   a plurality of differential decoders each receiving one of said plurality of demodulated data signals for differentially decoding into a plurality of differentially decoded data signals;
   a plurality of block decoders each receiving one of said plurality of differentially decoded data signals for decoding into a plurality of data signals; and
   a second multiplexer receiving said plurality of data signals and combining said plurality of data signals to form an output data signal.

7. The digital data communication system of Claim 1 wherein the digital data communication system being a satellite communication system, such that the transmitter being associated with at least one of a satellite and an earth terminal and the receiver being associated with at least one of a second satellite and a second earth terminal.

8. A digital data communication system for transmitting a high speed differentially encoded data signal between a transmitter and a receiver, the transmitter comprising:

a plurality of block encoders each receiving one of a plurality of data signals and applying a block code to form one of a plurality of block coded data signals, said block code being based on symbols having at least two bits; a multiplexer receiving said plurality of block coded data signals and combining said plurality of block coded data signals to form a multiplexed data signal, said multiplexer operating on a block code symbol-by-block code symbol basis; and a differential encoder receiving said multiplexed data signal and applying a differential code to form a differentially coded data signal.

9. A method for transmitting a high speed differentially encoded data signal between a transmitter and a receiver in a digital data communication system, comprising the steps of:

applying a block code to each of a plurality of data signals to form a plurality of block coded data signals; applying a differential code to each of said plurality of block coded data signals to form a plurality of differentially coded data signals; and multiplexing each of said plurality of differentially coded data signals to form a differentially coded transmissible data signal.

10. A method for transmitting a high speed differentially encoded data signal in a digital data communication system, comprising the steps of:

applying a block code to each of a plurality of data signals to form a plurality of block coded data signals, said block code being based on symbols having at least two bits; multiplexing each of said plurality of block coded data signals on a block code symbol-by-block code symbol basis, thereby forming a multiplexed data signal; and applying a differential code to said multiplexed data signal to form a differentially coded transmissible data signal.

11. The method of Claim 10 further comprising the steps of:

receiving said differentially coded transmissible data signal at the receiver; demodulating said differentially coded transmissible data signal into a demodulated data signal; differential decoding said demodulated data signal to form a differentially decoded data signal; demultiplexing said differentially decoded data signal into a plurality of differentially decoded data signals on a block code symbol-by-block code symbol basis; applying a block decoding to each of said differentially decoded data signals to form a plurality of decoded data signals; and multiplexing each said plurality of decoded data signals into an output decoded data signal.

FIGURE 1

| Original Data: | | 0 | 0 | 1 | 1 | 1 | 0 | 1 | 0 | 1 | 0 | 0 | 1 |
|---|---|---|---|---|---|---|---|---|---|---|---|---|---|
| Differentially Encoded: | 0 | 0 | 0 | 1 | 0 | 1 | 1 | 0 | 0 | 1 | 1 | 1 | 0 |
| Received Bits: | 0 | 1 | 0 | 1 | 0 | 1 | 1 | 1 | 0 | 1 | 1 | 1 | 0 |
| Differentially Decoded: | 1 | 1 | 1 | 1 | 1 | 0 | 0 | 1 | 1 | 0 | 0 | 1 | |

FIGURE 2

DEMUX
1:3

ABC ABC ABC

16

20

AAA

BBB

CCC

18

BLOCK
DECODER

BLOCK
DECODER

BLOCK
DECODER

22

FIGURE 3

DEMUX
1:3

AAAAAAA BBBBBBBB CCCCCCC

16

24

AAAAAAAA

BBBBBBBB

CCCCCCC

18

BLOCK
DECODER

BLOCK
DECODER

BLOCK
DECODER

22

FIGURE 4

Error Distributions

| .7 | 0 | 1 | 2 | 3 | 4 | 5 | 6 | 7 | 0 |

1 Symbol (8 Bits)

FIGURE 5

FIGURE 6

40

44

46

48

50

52

54

42

INPUT
DATA
STREAM

| DEMUX
(1:N) |

| BLOCK
ENCODER | → | DIFF
ENCODER |

| BLOCK
ENCODER | → | DIFF
ENCODER |

| BLOCK
ENCODER | → | DIFF
ENCODER |

| MUX
(N:1) |

| MODULATOR |

TRANSMISSABLE
DATA
STREAM

FIGURE 7

FIGURE 8

FIGURE 9